# EUROPEAN PATENT SPECIFICATION

(11) **EP 1 853 358 B1**
(45) Date of publication and mention of the grant of the patent: **08.05.2013**
(21) Application number: 06748267.9
(22) Date of filing: 01.03.2006
(51) Int. Cl.: A62D 1/04, A62D 1/08, A62C 2/00, A62C 3/00, A62C 8/00

(54) **FIRE FIGHTING FOAM CONCENTRATE**
LÖSCHSCHAUMKONZENTRAT
CONCENTRE DE MOUSSE EXTINCTRICE

(30) Priority: 01.03.2005 AU 2005900954
(43) Date of publication of application: 14.11.2007
(73) Proprietor: McWane Luxembourg IP S.a.r.l., 2086 Luxembourg (LU)
(72) Inventor: SCHAEFER, Ted H., Pymble, New South Wales 2073 (AU)
(74) Representative: Vossius & Partner
(86) International application number: PCT/US2006/007314
(87) International publication number: WO 2006/094077

(56) References cited:
- WO-A1-03/049813
- JP-A- 2001 072 930
- US-A- 4 050 489
- US-A- 4 301 310
- US-A- 4 394 930
- US-A1- 2005 118 106
- DATABASE WPI Week 198549 Thomson Scientific, London, GB; AN 1985-307845 XP002608791, & JP 60 215091 A (HAYAKAWA RUBBER KK) 28 October 1985 (1985-10-28)

## Description

### Field of the Invention

The present invention relates to a fire fighting foam concentrate, an expanded foam composition and a process of forming a foam composition concentrate. In particular the present invention relates to aqueous foaming compositions containing carbonised or caramelised saccharides. Foaming compositions of the present invention are most preferably biodegradable and/or environmentally compatible.

### Background

Foam materials are a class of commercially and industrially important chemical-based materials. Foams can be prepared by aerating a foaming composition (i.e., entrapping air in a foaming composition), which can be derived by diluting a concentrated precursor. Many foams require certain physical properties to be appropriately useful in desired applications. Among preferred physical properties for foams is the property of stability, to allow the foam to be in a useful form over an extended period of time and therefore useful where an especially stable foam can be desirable, e.g., fire prevention, fire extinguishment, vapor suppression and freeze protection for crops. Further uses include the reduction of surface tension for desirable penetration of fuels and wetting of surfaces, e.g., fire extinguishment, surface cleaning/decontamination and surface preparation (such as for concrete surfaces).

An important class of commercial foams includes aqueous film-forming foams (e.g., AFFFs and FFFPs), which aqueous compositions typically contain fluorochemical surfactants, non-fluorinated (e.g., hydrocarbon) surfactants, and aqueous or non-aqueous solvents.

Fire fighting foams can be used in a multitude of ways including on substrates, in buildings, underground, in ships, on structures, tyres, coal, peat and on solvent fires. Polar solvent fire-fighting foam concentrates are becoming increasingly wide-spread in the fire-fighting industry throughout the world because of their effectiveness on various types of flammable solvents and fuels. This type of foam concentrate is also known in the fire-fighting industry as "alcohol-resistant aqueous film forming foam" (AR-AFFF), "alcohol type concentrate" (ATC) or simply "multipurpose foam". Although these products are referred to as "polar-solvent" or "alcohol" resistant concentrates, they are generally designed to extinguish fires of both polar, hydrophilic liquids such as alcohols and non-polar, hydrophobic fuels.

These foams can be prepared from concentrates by diluting with water (fresh, brackish or seawater) to form a "premix", and then aerating the premix to form a foam. The foam forming composition is conveniently manufactured as a concentrate, to save space and reduce transportation and storage costs. The dilution prior to use of the concentrate is typically 3% concentration by volume (that is, 3 volumes of foam concentrate per 97 volumes of water). Other typical concentrations include 6% concentration by volume and 1% or less concentration by volume.

The foam can be dispersed onto a liquid chemical fire to form a thick foam blanket that knocks down the fire and then extinguishes the fire by suffocation. These foams also find utility as vapor suppressing foams that can be applied to non-burning but volatile liquids, e.g., volatile liquid or solid chemicals and chemical spills, to prevent evolution of toxic, noxious, flammable, or otherwise dangerous vapors. These foams can also be used on structural and bush or forest fires.

Individual components of a foaming composition contribute toward different physical and chemical properties of the premix and the foam. Selective surfactants can provide low surface tension, high foamability, and good film-forming properties, i.e., the ability of drainage from the foam to spread out and form a film over the surface of another liquid. Organic solvents can be included to promote solubility of surfactants, to promote shelf life of the concentrate, and to stabilize the aqueous foam. Thickening agents can be used to increase viscosity and stability of the foam. Other agents and additives can be used as is known to those skilled in the art.

Especially preferred properties of foams are stability, vapor suppression, and burnback resistance. Stability refers to the ability of a foam to maintain over time its physical state as a useful foam. Some fire-fighting foams, e.g., foams prepared from foaming premix compositions containing surfactant and hydrated thickener, are stable for periods of hours, or at least up to an hour, and are often regularly reapplied. Longer periods of stability can be achieved by adding ingredients such as reactive prepolymers and crosslinkers, polyvalent ionic complexing agents and proteins.

The use of fluorochemical compounds in foaming compositions for fire fighting is wide spread for example as taught in US Patent Nos. 3,772,195; 4,472,286; 4,717,744; 4,983,769; 5,086,786 and 5,824,238. The fluorinated compounds are generally used as surfactants to reduce the surface tension of the foaming composition. However, the production and use of certain fluorochemicals is being reduced and/or phased-out due to concerns associated with such chemicals and/or their use.

Natural compounds such as protein and polysaccharide additives to fire fighting foam solutions are also known. In particular, polysaccharides have been utilised in many forms including cellulose and its derivatives, guar gum, xanthan gum, and polysaccharide derivatives including molasses and other extraction including formoses, in addition to disaccharides and monosaccharides. The use of these materials in fire fighting foams are disclosed for example in Patents US 2514310 (1946), JP 53023196 (1978), DE 2937333-A (1981), GB 2179043-A (1986), US 4978460 (1988) and US 5215786 (1993).

US 2514310 describes a composition suitable for production of fire extinguishing foams containing an aqueous solution of an N-acyl, N-allcyl taurine sodium salt and a carboxymethylcellulose sodium salt. The compositions of the invention produce fire extinguishing foams highly effective for extinguishing liquid fires.

JP 53023196 describes the use of carboxymethylated yeast-based protein fire extinguishing solutions. The solutions are especially useful for treating large scale fires; the foams having good heat and oil resisting properties.

DE 2937333-A describes a water composition for protecting object surfaces exposed to fire, the composition containing fire-retardant compounds and optionally a wetting or foaming agent, preservative, phosphates, nitrogen compounds and further additives. The extinguishing water composition when subjected to fire generates a sticky layer of carbonisation foam following evaporation of the water thereby protecting the object from rapidy increasing in temperature. The fire-retardant additives for use in the invention include ammonium phosphates, polysaccharides, formoses (being formaldehyde polymers), dicyandiamide and ureas. The exemplified polysaccharide is sugar beet molasses, being typically the crude mother liquor which separates following crystallisation of white sugar.

GB 2179043-A describes aqueous foams primarily for use in the food industry as meringues and cake mixes. The foams are formed when compositions containing one acidic foamable protein, preferably whey protein isolate or bovine serum albumin, and a cationic polysaccharide, preferably chitisan. The aqueous foam composition can additionally contain a soluble sugar such as sucrose.

US 4978460 is directed to additives for water for the use in fire fighting compositions containing strongly swelling water-insoluble high molecular weight polymers as a gelatinising agent. The improvement to which the specification is directed relates to the use of release agents to encase and disburse the gelatinising agents protecting them from becoming sticky upon the penetration of water and dust from agglutinating. The preferred release agents of the invention are polyalkylene glycols. Further compounds including diammonium phosphates and sugars such as sugar alcohols including mannitol are described as being suitable for use as the release agent.

US 5215786 describes compositions for forming a biodegradable foam barrier between a substrate and the atmosphere. The foam-forming composition includes sodium sulphonate, a long alkyl chain carboxylic acid, potassium hydroxide, potassium silicate, a non-ionic solid organic water soluble material such as a sucrose or urea, and a hydroxylic solvent.

US 4060489 describes an aqueous foam formed with solution containing thixotropic polysaccharide in addition to foaming agent, such that it will gel when projected onto burning liquid fires. The thixotropic character enables the ready pumping of the foam and of the solution from which it is formed. The concentrate contains a substantial amount of N-methyl pyrrolidone-2 for such foam-producing solution so as to make the concentrate more adaptable for ready dilution and also improves its stability. Urea can be added to help solubilise the polysaccharide and to reduce the viscosity of the concentrate.

CN 1231207 describes the use of the proteosome of sugar beet plant in the preparation of a firefighting foam.

US 4387032 describes fire-fighting foam concentrates containing thixotropic polysaccharide thickeners dissolved in water. Higher concentrations are made practical by including in the concentrate urea, thiourea, ammonium cyanate or ammonium thiocyanate, to reduce the concentrate's viscosity and keep the polysaccharide from separating out upon freezing.

US 5215786 describes foam concentrates containing sodium sulfate, a carboxylic acid, potassium hydroxide, potassium silicate, a non-ionic solid organic water-soluble material and a hydroxylic solvent. Optionally the concentrate may contain sucrose or urea to assist in foam stiffness by increasing the solids content.

WO 03/049813 describes foam forming concentrates comprising a carbonised saccharide composition, a surfactant and water. These compositions enhance the performance of the foam for fire suppression and control, and related applications whilst exhibiting good biodegradability and environmental compatibility. The foam finds particular use in suppressing and extinguishing non-polar fires.

Despite the number of foaming compositions known, the continual threat of fire to property, structures, goods and the bush and the destruction, devastation and loss of life it causes means that there is an ongoing need for new, improved or at least alternative aqueous foaming compositions, foam compositions, and methods of preparing foaming compositions. There is also a continual need to have access to improved foam compositions which exhibit some selectivity in the control of various types of solvent fires. There also is a particular need for preparing foam compositions that are substantially or totally biodegradable and/or environmentally compatible.

### Summary of the Invention

It has surprisingly been found that the use of a carbonised saccharide composition augmented with urea or derivatives thereof and optionally magnesium salts in fire-fighting foams of the invention greatly enhances the performance of the foam for fire suppression and control, and related applications. The advantageous use of the augmented carbonised saccharide composition provides improved foaming compositions which also exhibit good biodegradability and environmental compatibility. Moreover it has been surprisingly found that the augmented foams of the invention find particular utility in addressing polar solvent fires such as those of methanol, ethanol or acetone.

Thus according to a first aspect of the present invention there is provided a foam forming composition comprising:
a carbonised saccharide composition,
a cross-linking agent and optionally an inorganic salt,
a surfactant, and
water.

The cross-linking agent is selected from urea and a urea derivative. In an embodiment of the invention the foam forming composition contains a magnesium salt, such as magnesium sulfate, chloride, nitrate or acetate as the inorganic salt.

According to a second aspect of the present invention there is provided a foam composition prepared from the foam forming composition of the first aspect.

According to a third aspect of the present invention there is provided a process for preparing a foam composition including the step of aerating the foam forming composition defined above. The foam forming composition is preferably aerated by adding the foam forming composition to a flow of water, preferably water flowing through a hose and nozzle such as a fire-fighting hose.

According to a fourth aspect of the present invention there is provided a process for preparing the foam forming composition defined above including mixing a carbonised saccharide composition, the cross-linking agent and optionally inorganic salt, salt, a surfactant and water in any suitable order to form the composition.

According to a fifth aspect of the present invention there is provided a method for enhancing the fire fighting capabilities of a foam including the step of preparing the foam forming composition defined above for use in the preparation of the foam.

According to a sixth aspect of the present invention there is provided a method for suppressing or extinguishing fires including the step of applying a foamed composition comprising a carbonised saccharide composition, the cross-linking agent and optionally inorganic salt, a surfactant and water to a fire or to a hot or flammable surface.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of integers or steps.

### Detailed Description

The invention provides chemical compositions that can be aerated to form an expanded foam composition (also referred to as a "foam"). The foam can be used in various applications including any applications understood to be useful in the art of aqueous foam materials. The foam finds utility in fighting Class A fires including structural fires, packaging fires, material fires, tyre fires, coal fires, peat fires, wild fires, bush fires, forest fires and other similarly naturally occurring and industrially based fires.

The foam can also be useful to contain or suppress volatile, noxious, explosive, flammable, or otherwise dangerous chemical vapors. The vapors may evolve from a chemical such as a chemical storage tank, a liquid or solid chemical, or a chemical spill. The foam can also be used to extinguish a chemical fire or to prevent ignition or re-ignition of a chemical. These applications will be referred to collectively for purposed of the present description as "application to a chemical" or application to a "liquid chemical". The compositions are especially useful for extinguishing and securing extremely flammable (e.g., having low boiling point and high vapor pressure) and difficult-to-secure chemicals, for example transportation fuels such as methyl t-butyl ether (MTBE), ether/gasoline blends, avgas, avtur and petroleum. Importantly, the compositions find particular utility in fighting polar solvent fires including ethanol, methanol and acetone fires. Additionally, the foam can be applied to other substrates that are not necessarily hazardous, volatile, ignited, or ignitable. As an example, the foam may be applied to land, buildings, or other physical or real property in the potential path of a fire, as a fire break, e.g., to prevent or at least delay such property from catching fire.

As used herein, the term "foam" is used according to its industry-accepted sense, to mean a foam made by physically mixing a gaseous phase (e.g., air) into an aqueous liquid to form a two phase system of a discontinuous gas phase and a continuous aqueous phase.

The fire fighting foam of the invention exhibits enhanced fire performance due to the addition of a carbonised saccharide composition and a cross-linking agent and an optional inorganic salt.

The carbonised saccharide comprises a mixture of one or more simple sugars and prepared carbonised sugars. Saccharides for use in the present invention are generally simple sugars or other such carbohydrates, preferably common sugar (sucrose) derived from sugar cane or sugar beets. Sucrose is a disaccharide composed from the basic, simple sugar molecules glucose and fructose. Sucrose is readily available given that the world production from cane and sugar beet is in the order of millions of tonnes per annum. Those skilled in the art will also be aware that other commercially available simple saccharides and sugars can be utilised in the foaming compositions of the invention.

The carbonised saccharides include caramelised, charred or burnt sugars such as treacle, golden syrup and molasses. In this regard reference to the term "carbonised" as it refers to sugars and saccharides is taken in its broadest sense to include caramelised sugars including those that are sublimed, partially sublimed, flaked, baked, heat-treated or chemically treated to effect a morphological and/or chemical change to the sugar normally resulting in a form of polymerisation of the sugar molecules with concomitant darkening or charring of the sugar.

The carbonised saccharide composition typically contains partially refined saccharide components of, for example, cane sugar present as brown or dark brown sugar, which enhances performance and consistency of performance over mixtures without caramelised, charred or burnt components.

Controlled heating of a raw extract of saccharides a little above its melting point caramelises (or carbonises) the sugar molecules with a loss of water to form yellow, brown or dark brown-coloured sugar products such as molasses. As known in the art, caramelisation of sugars can be achieved by the action of steam pressure on sugar in a caramelising kettle, at a set temperature and for a controlled duration. Usually a heating interval of 60-180 minutes at a temperature of approximately 160-180°C will give satisfactory results. Typically gentler heating will produce a yellow or brown caramelised sugar, whereas stronger and/or prolonged heating will form darker brown or even black sugars more generally referred to as carbonised sugars.

As used herein, the term "caramelised sugar" is taken to mean any darkened process sugar which includes the lighter caramelised sugars. The addition of carbonised sugar to common white sugar, with the optional addition of invert sugar, produces processed sugar commonly known as brown sugar. In a preferred embodiment, the carbonised saccharide composition for use in the foam forming compositions of the present invention is a brown sugar which has been subjected to a heating or drying step in the manufacturing process.

Alternatively brown sugar is prepared by heating purified sugar syrup until it crystallises to form a soft yellow or brown sugar. The amount and duration of heating has a direct effect on the strength and darkness of the resultant brown sugar.

Dark brown sugar, as supplied by CSR Australia, is particularly suitable for use in the compositions and methods of this invention. The CSR brown sugar comprises sucrose crystals painted with molasses syrup. The proportions are about >85% cane sugar (sucrose and reduced sugars such as glucose/fructose), <15% molasses, and <10% ash (carbonised sugars) and moisture, plus other organics including dextrin and other sugar cane related materials. In the production of the brown sugar, the carbonised saccharide mixture is subjected to a heating or drying step. It is thought that this processing step improves the fire resistance properties of the aqueous foaming compositions of the invention.

Carbonisation of sugars is also possible by treating the sugar with a mineral acid such as sulphuric acid which chars the sugar, formic acid, carbon dioxide and sulphur dioxide being evolved, and a blackened mass of carbon resulting.

A particularly preferred carbonised sugar blend is standard brown sugar obtained from CSR Australia. Best results are obtained from carbonised sugar compositions comprising 86-99.7 wt.% sucrose, 0-7 wt.% reduced sugars (e.g., fructose and glucose), with molasses and charred/burnt sugars and ash 0.01-10 wt.% as balance. The quantity of water may be in the range of 5-89.9 wt.%, more preferably 45-70 wt.%; the surfactant 3-33 wt.% and the thickener 0-10 wt.%.

In addition to urea, it can be advantageous to include in the concentrates of the invention urea derivatives containing at least one urea group and at least one hydroxyl group such as the hydroxyalkylureas. Other useful urea derivatives include ureas having bases of ethylene urea. Preferably simple urea is used in the formulations of the invention.

The urea in the examples which follow has been found to dramatically increase the 75% control, extinguishment and 33% burn back times of the solvent fires tested. Quite surprisingly the augmented carbonised saccharide compositions of the invention show particular utility on polar solvent fires. This is in sharp comparison to the carbonised saccharide compositions from the prior art known for their superior activity on non-polar solvent fires such as from Avtur and Avgas. The solvents are preferably ethanol, methanol, acetone and other such solvents which are inflammable and have water solubility.

The urea for use in the invention is preferably sourced in bulk as prill. The content of urea is preferably 0.5-10 wt.%, more preferably about 1-5 wt.% and more preferably about 2-3 wt.%. The urea has the added advantage of acting as an anti-freeze and stabilising agent for the concentrate.

The presence of magnesium ions in the foams made from the concentrates has been found to greatly assist in the foams ability to knock down a fire, extinguish and delay burn back. Preferably the magnesium salt is present in a proportion of 0.1 to 2 wt.%, more preferably about 0.3 to 1 %, still more preferably about 0.5wt.% to improves the fire-extinguishing effectiveness.

Adding too much magnesium ion can also produce problems such as the precipitation of magnesium compound when the concentrate is subjected to very low temperatures. Such precipitation could interfere with the use of the concentrate in standard foam generating equipment in extremely cold weather. Other water-soluble magnesium salts such as magnesium chloride, nitrate, and/or acetate can be substituted for some or all of the magnesium sulfate, if desired.

The augmented compositions of the invention may contain both the urea or derivative thereof and the magnesium salt.

Surfactants are included in the foaming compositions to facilitate foam formation upon aeration, to promote spreading of drainage from the foam composition as a vapor-sealing aqueous foam over a liquid chemical, and, where desired, to provide compatibility of the surfactant with sea water. Useful surfactants include water-soluble hydrocarbon surfactants and silicone surfactants, and may be non-ionic, anionic, cationic or amphoteric. Particularly useful surfactants include hydrocarbon surfactants which are anionic, amphoteric or cationic, e.g., anionic surfactants preferably having a carbon chain length containing from about 6 to about 12 or up to 20 carbon atoms. Saccharide surfactants, such as the non-ionic alkyl polyglycosides, can be particularly useful to the composition.

Organic solvents can be included in the foaming composition to promote solubility of a surfactant, to improve shelf life of a concentrated adaptation of the foaming composition, to stabilise the foam, and in some cases to provide freeze protection. Organic solvents useful in the foaming composition include but are not limited to glycols and glycol ethers including diethylene glycol n-butyl ether, dipropylene glycol n-propyl ether, hexylene glycol, ethylene glycol, dipropylene glycol monobutyl ether, dipropylene glycol monomethyl ether, dipropylene glycol monopropyl ether, propylene glycol, glycerol, polyethylene glycol (PEG) and sorbitol.

Thickening agents are well known in the chemical and polymer arts, and include, inter alia, polyacrylamides, cellulosic resins and functionalised cellulosic resins, polyacrylic acids, polyethylene oxides and the like. One class of thickener that can be preferred for use in the foaming composition and methods of the invention is the class of water-soluble, polyhydroxy polymers, especially polysaccharides. The class of polysaccharides includes a number of water-soluble, organic polymers that can increase the thickness, viscosity or stability of a foam composition. Preferred polysaccharide thickeners include polysaccharides having at least 100 saccharide units or a number average molecular weight of at least 18,000. Specific examples of such preferred polysaccharides include xanthan gum, scleroglucan, heteropolysaccharide-7, locust bean gum, partially-hydrolyzed starch, guar gum and derivatives thereof. Examples of useful polysaccharides are described, for example, in U.S. Pat. Nos. 4,060,489 and 4,149,599. These thickening agents generally exist in the form of water-soluble solids, e.g., powders. While they are soluble in water, in their powder form they can and typically do contain a small amount of adventitious or innate water, which is absorbed or otherwise associated with the polysaccharide.

The concentrate composition of the present invention also may comprise a polysaccharide, preferably an anionic heteropolysaccharide having a high molecular weight. Commercially available polysaccharides useful in the invention include those sold under the trademarks, e.g., Kelzan™ and Keltrol™ (available from Kelco). The polymeric structure is not critical for the purposes of this invention. Only a small amount of polysaccharide is required to result in a noticeable change in properties.

Optionally, other polymeric stabilisers and thickeners can be incorporated into the concentrate compositions of the invention to enhance the foam stability of the foam produced by aeration of the aqueous solution made from the concentrate. Examples of suitable polymeric stabilisers and thickeners are partially hydrolzyed protein, starches and modified starches, polyacrylic acid and its salts and complexes, polyethyleneimine and its salts and complexes, polyvinyl resins, e.g., polyvinyl alcohol, polyacrylamides, carboxyvinyl polymers and poly(oxyethylene)glycol.

Other ingredients known to those skilled in the art that are usually employed in fire-fighting compositions may be employed in the concentrate compositions of this invention. Examples of such ingredients are preservatives, buffers to regulate pH (e.g., tris(2-hydroxyethyl)amine or sodium acetate), corrosion inhibitors (e.g., toluoltriazole or sodium nitrite), antimicrobial agents, divalent ion salts, foam stabilisers and humectants. In addition, flame retardant materials such as inorganic salts (ex phosphates or sulfates) and organic salts (such as salts of acetate).

A foaming composition can be prepared by mixing or combining together its ingredients, e.g., water, a carbonised saccharide mixture, and surfactant, plus any additionally desired ingredients. For example, a foaming composition can be prepared by providing water, e.g., a fixed amount within a reaction vessel or other container, or preferably a flow of water travelling through a hose or pipe, most preferably a hose, and then adding non-water ingredients (e.g., surfactant, thickener, etc.) to the water. The non-water ingredients can be added to the water individually or as one or more mixtures, and in any desired order.

A foaming composition can be prepared using foam production equipment known in the fire-fighting art. Such equipment can include a conventional hose to carry a flow of water, plus appurtenant equipment useful to inject, educt or otherwise add non-water ingredients to the flow of water. Water can flow under pressure through a fire hose, and surfactant, thickener, and other non-water ingredients can be injected or drawn (e.g., educed by venturi effect) into the flow of water. Other techniques such as compressed gas foaming systems can be employed as well known to those skilled in the art.

The composition of the invention is employed in the usual way to combat fires of flammable liquids or to prevent evaporation of flammable vapours. The composition is particularly suitable for application in the form of a foam. Usually it is stored in the form of an aqueous concentrate only requiring dilution typically as a 1, 3 or 6% concentrate with either fresh, brackish or sea water to form the "premix", followed by aeration of the premix to produce a foam which is applied to the burning substrate or substrate to be protected as required. The use of carbonised saccharide mixtures provides better fire protective properties of the foams of the invention when sea water, or brackish water, is used as the diluent.

The foams of the invention are useful for application to grassland, woodland, bush, scrub or forest, or to liquids chemicals, wood, paper, fabric, cardboard or other substrates which are on file or may be volatile, flammable, otherwise hazardous, or not hazardous at all but desirably protected from potential ignition. Without wishing to be limited to theory, it is believed that the inclusion of carbonised sugars and related molasses from partially refined components of sugar cane may form a protective layer and char further when fire impinges on the coated material. In a fire situation, the foam mixture can extinguish the fire via cooling and smothering (oxygen barrier or removal). The related sugar compounds could form a protective layer on the combustible fuel if applied at significant concentrations.

The foam of the invention is particularly suited for use on polar solvent fires such as ethanol, methanol and acetone fires. These solvent fires can be resistant to foam fire fighting especially where the solvent has the ability to dissolve the foam at a speed sufficient to hamper its fire knock down, extinguishment and burn back characteristics.

The foam of the invention has rapid flow characteristics on flammable liquids, like an aqueous film forming foam (AFFF), yet does not necessarily fulfil the mathematical parameters of the spreading coefficient calculation, nor does it necessarily have a positive spreading coefficient. However the mixtures do have measurable and well-defined surface tensions and interfacial tensions.

Other uses, embodiments and advantages of this invention are further illustrated by the following examples, but the particular materials and amounts thereof cited in these examples, as well as other conditions and details, should not be construed to unduly limit this invention.

### Examples

The foam mixture of the invention exhibits fire control, fire extinguishment, and burn back resistance capabilities similar to AFFF technology when used on flammable liquids. This has been observed on a number of flammable liquid fuels having a test pool surface area of 0.28 m². Tests were conducted on flammable liquids Avgas, Avtur and ethanol. The 0.28 m² test surface area relates to the standard fixed application test: Def (Aust) 5603C (0.28m²).

A typical formulation consists of the following general mixtures for use at 6 wt.% concentration (with 94% water). The ingredients are mixed in order for the times indicated. The mixtures are subjected to foamed expansion following dilution for application to flammable liquid fires. Persons skilled in the art may alter the proportions as appropriate to make concentrations other than 6 wt.%, such as for example 3 wt.% and 1 wt.% as desired.

**Mixture A - Carbonised sugar blend/Urea**

| **Raw Material** | **Mixing Time** | **% By Weight of Raw Material** |
|---|---|---|
| Water | Start (heat to 65°C) | 40-80% |
| Diethylene Glycol Monobutyl Ether (Butyl Di-Incinol) | Use to disperse Keltrol and starch | 1-14% |
| Xanthan Gum (Keltrol) | Mix for 1 hour | 0-2.5% |
| Starch (Cerestar) | Mix for 16 hours | 0-2.5% |
| Carbonised Sugar Blend | Mix approx. 1 hr | 6-25% |
| Diethanolamine Lauryl Sulfate | Mix 20 mins | 0-10% |
| Sodium Decyl Ethoxy Sulfate | Mix 20 min | 0-10% |
| Cocamidopropyl Betaine | Mix 20 min | 0-10% |
| Cocamidopropyl Hydroxy Sultaine | Mix 20 min | 0-10% |
| Sodium Octyl Sulfate | Mix 20 min | 0-10% |
| Sodium Decyl Sulfate | Mix 20 min | 0-10% |
| Silicone Fluid (Dimethyl-methyl 3-hydroxypropyl ethoxylate siloxane) | Mix 20 min | 0-10% |
| Alkyl polyglycocide (C8-C16 distributions) | Mix 20 min | 0-10% |
| Ethoxylated Alcohol (Teric) | Mix 20 min | 0-10% |
| 1-dodecyl-2-pyrrolidinone | Mix 20 min | 0-10% |
| Urea | Mix 20 min | 0.5-10% |
| Laurel Alcohol | Mix 20 min | 0-10% |
| MEK alcohol (palm kernel oil derivative) | Mix 20 min | 0-5% |

**Mixture B-Carbonised sugar blend/Magnesium sulfate (Reference)**

| **Raw Material** | **Mixing Time** | **% By Weight of Raw Material** |
|---|---|---|
| Water | Start (heat to 65°C) | 40-80% |
| Diethylene Glycol Monobutyl Ether (Butyl Di-Incinol) | Use to disperse Keltrol and starch | 1-14% |
| Xanthan Gum (Keltrol) | Mix for 1 hour | 0-2.5% |
| Starch (Cerestar) | Mix for 16 hours | 0-2.5% |
| Carbonised Sugar Blend | Mix approx. 1 hr | 6-25% |
| Diethanolamine Lauryl Sulfate | Mix 20 mins | 0-10% |
| Sodium Decyl Ethoxy Sulfate | Mix 20 min | 0-10% |
| Cocamidopropyl Betaine | Mix 20 min | 0-10% |
| Cocamidopropyl Hydroxy Sultaine | Mix 20 min | 0-10% |
| Sodium Octyl Sulfate | Mix 20 min | 0-10% |
| Sodium Decyl Sulfate | Mix 20 min | 0-10% |
| Silicone Fluid (Dimethyl-methyl 3-hydroxypropyl ethoxylate siloxane) | Mix 20 min | 0-10% |
| Alkyl polyglycocide (C8-C16 distributions) | Mix 20 min | 0-10% |
| Ethoxylated Alcohol (Teric) | Mix 20 min | 0-10% |
| 1-dodecyl-2-pyrrolidinone | Mix 20 min | 0-10% |
| Magnesium Sulfate | Mix 20 min | 0.1-5% |
| Lauryl Alcohol | Mix 20 min | 0-10% |
| MEK alcohol (palm kernel oil derivative) | Mix 20 min | 0-5% |

The concentrates may be pH adjusted such as to neutral if required. The sugar blend is a carbonised saccharide mixture of 86-99.7% sucrose, 0.3-7% reduced sugars (e.g. fructose and/or glucose) with molasses and charred/burnt sugars and ash as balance. The mixture is typically referred to as brown or dark brown sugar.

The concentrates described in Examples 1 to 3 below are carbonised saccharide and urea mixtures additionally containing xanthan gum and starch. The carbonised saccharide concentrations range at about 12-13 wt.%. The urea concentrations are 2.6, 5.0 and 5.2 wt.% respectively.

The 0.28 m² pan tests for 75% control, extinguishment and 33% burn-back are conducted on non-polar solvents avgas and avtur and the polar solvent ethanol using either fresh water or sea water. Avgas is standard high octane petrol aviation fuel. Avtur is standard Jet A-1 fuel, a form of kerosene. 75% control represents the time taken to bring the pan fire under control to 75%. Extinguish represents the time taken to extinguish the fire. 33% burn back is representative of when the pan fire regains 33% of its original heat when it is relit with fire. A larger burn back time represents better performance of the foam.

### Example 1

| **Raw Material** | **Weight (g)** | | **Fire Test** | **75% Control** | **Extinguish** | **33% Burn Back** |
|---|---|---|---|---|---|---|
| Water | 2897.6 | | **0.28 m² pan** | | | |
| Butyl Di-Icinol | 360 | | Avgas/ Sea Water | 30 sec | 46 sec | 6:36 |
| Xanthan Gum | 39.5 | | | | | |
| Starch | 37.5 | | Avtur/ Fresh Water | 26 sec | 70 sec | 7:24 |
| DEA Lauryl Sulfate | 0.0 | | | | | |
| Cocamidopropyl betaine | 72 | | Ethanol/ Fresh Water | 117 sec | 329 sec | 9:48 |
| Cocamidopropyl hydroxy sultaine | 92.16 | | | | | |
| Na Decyl Ethoxy Sulfate | 112.5 | | | | | |
| Urea | 112.5 | | | | | |
| Magnesium Sulfate | 0 | | | | | |
| Sugar Blend | 549 | | | | | |
| Ethoxylated Alcholo Teric G9A5 | 56.3 | | | | | |

### Example 2

| **Raw Material** | **Weight (g)** | | **Fire Test** | **75% Control** | **Extinguish** | **33% Burn Back** |
|---|---|---|---|---|---|---|
| Water | 2897.6 | | **0.28 m² pan** | | | |
| Butyl Di-Icinol | 360 | | Avgas/ Sea Water | 30 sec | 47 sec | 12:10 |
| Xanthan Gum | 39.5 | | | | | |
| Starch | 37.5 | | Avtur/ fresh Water | 26 sec | 70 sec | 10:54 |
| DEA Lauryl Sulfate | 0.0 | | | | | |
| Cocamidopropyl betaine | 72 | | Ethanol/ Fresh Water | 85 sec | 198 sec | 18:36 |
| Cocamidopropyl hydroxy sultaine | 92.16 | | | | | |
| Na Decyl Ethoxy Sulfate | 112.5 | | | | | |
| Urea | 225 | | | | | |
| Magnesium Sulfate | 0 | | | | | |
| Sugar Blend | 549 | | | | | |
| Alkyl polyglycoside (C8-C16) | 157.5 | | | | | |

### Example 3

| **Raw Material** | **Weight (g)** | | **Fire Test** | **75% Control** | **Extinguish** | **33% Burn Back** |
|---|---|---|---|---|---|---|
| Water | 2897.6 | | **0.28 m² pan** | | | |
| Butyl Di-Icinol | 90 | | Avgas/ Sea Water | 30 sec | 40 sec | 4:36 |
| Xanthan Gum | 39.5 | | | | | |
| Starch | 37.5 | | Avtur/ Fresh Water | 22 sec | 44 sec | 11:06 |
| DEA Lauryl Sulfate | 0.0 | | | | | |
| Cocamidopropyl betaine | 72 | | Ethanol Fresh Water | 88 sec | 188 sec | 9:12 |
| Cocamidopropyl hydroxy sultaine | 92.16 | | | | | |
| Na Decyl Ethoxy Sulfate | 112.5 | | | | | |
| Urea | 225 | | | | | |
| Magnesium Sulfate | 0 | | | | | |
| Sugar Blend | 549 | | | | | |
| Alkyl polyglycoside (C8-C16) | 157.5 | | | | | |
| 1-dodecyl-2-pyrrolidinone | 45 | | | | | |

The results highlight the effectiveness of the carbonised sugar blend and urea fire foams in addressing both non-polar and polar solvent fires. Of particular note is the formulation of Example 2 where the ethanol solvent fire shows an excellent 33% burn back time of 18 min 36 sec.

The concentrate described in Example 4 below is a similar carbonised saccharide and urea mixture as above but additionally containing a silicon fluid. The carbonised saccharide concentration is about 14.8 wt.%, the urea concentration about 1.9 wt.% and the silicon fluid about 2 wt.%.

### Example 4

| **Raw Material** | **Weight (g)** | | **Fire Test** | **75% Control** | **Extinguish** | **33% Burn Back** |
|---|---|---|---|---|---|---|
| Water | 3034 | | **0.28 m² pan** | | | |
| Butyl Di-Icinol | 358 | | Avgas/ Fresh Water | 35 sec | 53 sec | 11:00 |
| Xanthan Gum | 34 | | | | | |
| Starch | 32 | | Avtur/ Fresh Water | 30 sec | 65 sec | 7:12 |
| TEA/DEA Lauryl Sulfate blend | 469 | | | | | |
| Cocamidopropyl betaine | 47 | | Ethanol/ Fresh Water | 38 sec | 71 sec | 24:36 |
| Cocamidopropyl hydroxy sultaine | 60 | | | | | |
| Na Decyl Ethoxy Sulfate | 69 | | | | | |
| Urea | 96 | | | | | |
| Lauryl alcohol | 21.5 | | | | | |
| Silicone Fluid (Dimethyl-methyl 3-hydroxypropyl ethoxylate siloxane) | 100 | | | | | |
| MEK alcohol (palm kernel oil derivative) | 4 | | | | | |
| Sugar Blend | 750 | | | | | |

The results further highlight the effectiveness of the carbonised sugar blend and urea fire foams in addressing both non-polar and polar solvent fires. Use of the silicone fluid increased the fire fighting capability of the aqueous foam, particularly on polar solvent fires.

The concentrate described in Example 5 below is a carbonised saccharide mixture similar to Examples 1 to 3, but with the urea substituted by magnesium sulfate. The carbonised saccharide concentration is about 11.8 wt.% and the magnesium sulfate is about 0.47 wt.%.

### Example 5 (Reference)

| **Raw Material** | **Weight (g)** | | **Fire Test** | **75% Control** | **Extinguish** | **33% Burn Back** |
|---|---|---|---|---|---|---|
| Water | 3793 | | **0.28 m² pan** | | | |
| Butyl Di-Icinol | 448 | | Avgas/ Sea Water | 29 sec | 69 sec | 9:30 |
| Xanthan Gum | 42.5 | | | | | |
| Starch | 40 | | Avtur/ Fresh Water | 29 sec | 72 sec | 9:00 |
| DEA Lauryl Sulfate | 250 | | | | | |
| Cocamidopropyl betaine | 93.5 | | Ethanol/ Fresh Water | 45 sec | 124 sec | 16:00 |
| Cocamidopropyl hydroxy sultaine | 119.5 | | | | | |
| Na Decyl Ethoxy Sulfate | 137.5 | | | | | |
| Na Octyl Sulfate | 297.5 | | | | | |
| Na Decvl Sulfate | 329 | | | | | |
| Sugar Blend | 750 | | | | | |
| Magnesium sulfate | 30 | | | | | |

Again, quite remarkably, the results highlight the effectiveness of the carbonised sugar blend fire foams in addressing both non-polar and polar solvent fires. Of particular note is the excellent ethanol solvent fire results, particularly the extinguishment and 33% burn back times.

The concentrate described in Comparative Example 6 below is representative of the carbonised saccharide formulations from WO 03/049813. The concentrate below contains no urea. Nor does the concentrate contain magnesium sulfate. The carbonised saccharide concentration is about 11.9 wt.%.

### Comparative Example 6

| **Raw Material** | **Weight (g)** | | **Fire Test** | **75% Control** | **Extinguish** | **33% Burn Back** |
|---|---|---|---|---|---|---|
| Water | 3793 | | **0.28 m² pan** | | | |
| Butyl Di-Icinol | 448 | | Avgas/ Sea Water | 30 sec | 41 sec | 11:06 |
| Xanthan Gum | 42.5 | | | | | |
| Starch | 40 | | Avtur/ Fresh Water | 26 sec | 54 sec | 10:06 |
| DEA Lauryl Sulfate | 250 | | | | | |
| Cocamidopropyl betaine | 93.5 | | Ethanol/ Fresh Water | 184 sec | 468 sec | 2:24 |
| Cocamidopropyl hydroxy sultaine | 119.5 | | | | | |
| Na Decyl Ethoxy Sulfate | 137.5 | | | | | |
| Na Octyl Sulfate | 297.5 | | | | | |
| Na Decyl Sulfate | 329 | | | | | |
| Sugar Blend | 750 | | | | | |

In this comparative Example, the expanded foam absent any urea or magnesium sulfate showed that a significantly longer time was necessary to achieve extinguishment of the fire (488 seconds compared to a about 71-198 and up to 329 seconds). The burn back resistance of the comparative foam containing was quite poor (2:24) compared to from 9 to 24 minutes for the carbonised sugar blend/urea or magnesium sulfate mixtures.

The concentrate described in Comparative Examples 7 and 8 follow from Example 4 where the carbonised sugar blend is substituted by 15 wt.% molasses (Comparative Example 7) and 15 wt.% white sugar and 2 wt.% urea (Comparative Example 8).

### Comparative Example 7

| **Raw Material** | **Weight (g)** | | **Fire Test** | **75% Control** | **Extinguish** | **33% Burn Back** |
|---|---|---|---|---|---|---|
| Water | 3034 | | **0.28 m² pan** | | | |
| Butyl Di-Icinol | 358 | | Avgas/ Fresh Water | 33 sec | 57 sec | 8:30 |
| Xanthan Gum | 34 | | | | | |
| Starch | 32 | | Avtur/ Fresh Water | 32 sec | 87 sec | 7:18 |
| TEA/DEA Lauryl Sulfate blend | 469 | | | | | |
| Urea | 0 | | Ethanol/ Fresh Water | 250 sec | - | n/a |
| Lauryl alcohol | 21.5 | | | | | |
| MEK alcohol (palm kernel oil derivative) | 4 | | | | | |
| Molasses | 750 | | | | | |

### Comparative Example 8

| **Raw Material** | **Weight (g)** | | **Fire Test** | **75% Control** | **Extinguish** | **33% Burn Back** |
|---|---|---|---|---|---|---|
| Water | 3034 | | **0.28 m² pan** | | | |
| Butyl Di-Icinol | 358 | | Avgas/ Fresh Water | 34 sec | 52 sec | 9:48 |
| Xanthan Gum | 34 | | | | | |
| Starch | 32 | | Avtur/ Fresh Water | 31 sec | 85 sec | 6:30 |
| TEA/DEA Lauryl Sulfate blend | 469 | | --- | | | |
| Urea | 96 | | Ethanol/ Fresh Water | 52 sec | 188 sec | 4:18 |
| Lauryl alcohol | 21.5 | | | | | |
| MEK alcohol (palm kernel oil derivative) | 4 | | | | | |
| White sugar | 750 | | | | | |

Comparative example 7 containing molasses as the saccharide component in the foaming composition shows ordinary performance on non-polar fires, but did not extinguish the polar solvent ethanol fire. As a result no 33% burn back result could be obtained for the ethanol fire.

Comparative example 8 containing urea and white sugar as the saccharide component in the foaming composition again shows average performance on non-polar fires, and ordinary performance on ethanol fires.

The concentrate described in Comparative example 9 follows from Example 6 where the carbonised sugar blend is substituted by molasses and white sugar present in a 6:94 ratio as individual components at a total sugar content of about 10.9 wt.%.

### Comparative Example 9

| **Raw Material** | **Weight (g)** | | **Fire Test** | **75% Control** | **Extinguish** | **33% Burn Back** |
|---|---|---|---|---|---|---|
| Water | 3793 | | **0.28 m² pan** | | | |
| Butyl Di-Icinol | 448 | | Avtur/Water pH=5.35, 3% | 26 sec | 127 sec | not tested |
| Xanthan Gum | 42.5 | | pH=5.35, 6% | 26 sec | 131 sec | not tested |
| Starch | 40 | | pH=8, 3% | 26 sec | 157 sec | not tested |
| DEA Lauryl Sulfate | 250 | | pH=8, 6% | 23 sec | 150 sec | not tested |
| Cocamidopropyl betaine | 93.5 | | | | | |
| Cocamidopropyl hydroxy sultaine | 119.5 | | | | | |
| Na Decyl Ethoxy Sulfate | 137.5 | | | | | |
| Molasses | 36 | | | | | |
| White Sugar | 564 | | | | | |

The foam concentrate of Comparative example 9 had a pH of about 5.35 and was applied as a foam at 3% and 6% concentrations by volume onto avtur fires. The 75% control result is good, but the extinguishment time not quite as good as for the carbonised sugar blend compositions. Similar results were obtained when the pH of the concentrate was adjusted to about neutral (~8) following addition of sodium hydroxide. Likewise, similar results were obtained when the molasses content was halved (18 g) compared to the white sugar content present at a 3:97 ratio as individual components. These results show that the concentrates containing carbonised sugar blends (brown sugar) range from being similar to and better than to far superior in performance when compared to analogous concentrates containing molasses, white sugar or mixtures thereof.

Addition of urea to the carbonised saccharide foam concentrates has a strong effect on the ability of the foam produced therefrom to spread and maintain on the polar solvent fuel, without having significant detrimental effect on the performance on hydrocarbon (immiscible fuels) such as avgas and avtur. It is thought that the foam structure is such that it resists being dissolved by polar solvents. The carbonised sugar blends provide superior extinguishing characteristics and bum-back control, especially on polar solvent fires, when compared to similar compositions made with molasses or plain white sugar. Moreover, the results achieved by use of the carbonised sugar blends without the addition of fluorinated surfactants are unexpected. The compositions and methods of the invention utilise sugar blends pre-carbonised prior to application to fires or hot or flammable surfaces.

### European test results

The urea-based concentrate from Example 2 above was subjected to European EN 1568 standard tests for surface application to water-immiscible (1568-3) and water-miscible (1568-4) liquids of foam concentrates. Heptane is used in the water-immiscible test, whilst acetone is used in the water-miscible test.

### Example 10

### EN 1568-3, concentration 3%

| Application | Water | 90% Control time (min:s) | 99 % Control time (min:s) | Extinction Time (min:s) | Burnback Time (min:s) |
|---|---|---|---|---|---|
| Forceful | Portable | 0:40 | 1:30 | 2:05 | 1:30 |
| Forceful | Sea | 0:40 | 1:20 | 2:20 | 1:30 |
| Forceful | Sea | 0:50 | 1:20 | 1:54 | 2:10 |
| Gentle | Potable | 0:45 | 1:30 | 2:00 | 17:40 |
| Gentle | Sea | 0:45 | 2:00 | 4:50 | 14:00 |
| Gentle | Sea | 0:45 | 1:30 | 4:20 | 15:00 |

### Conclusion:

| | Extinguishing performance class | Burnback resistance level |
|---|---|---|
| 1568-3 | | |
| potable water | 1 | B |
| sea water | 1 | C |

### Example 11

### EN 1568-4, concentration 6%

| Water | 90 % Control time (min:s) | 99 % Control time (min:s) | Extinction Time (min:s) | Burnback Time (min:s) |
|---|---|---|---|---|
| Potable | 1:20 | 1:45 | 2:00 | 16:30 |
| Sea | 1:30 | 1:50 | 2:14 | 10:50 |
| Sea | 1:25 | 1:55 | 2:30 | 11:40 |

### Conclusion:

| | Extinguishing performance class | Burnback resistance level |
|---|---|---|
| 1568-4 | | |
| potable water | 1 | A |
| sea water | 1 | B |

The above tables highlight the effectiveness of the carbonised sugar blend/urea foam concentrates and having particular utility in the field of fighting polar liquid fires. Foam compositions of the present invention are similar if not better that comparable prior art fire foam compositions.

It is observed that rapid flammable liquid extinguishment occurs with carbonised sugar as compared to simple, food grade white sugar (sucrose). The use of urea or magnesium sulfate gives the foam substantially better resistance to polar solvents extending the burn back resistance of the foam. Use of organic surfactants, such as alcohol ethoxylates or alkyl pyrrolidinones can assist in the foam spreading on polar solvents to enhance extinguishment times and survivability of the foam on the surface of the polar solvents.

The preferred foaming compositions of the present invention are the urea-containing carbonised saccharide foams prepared without fluorochemical compounds or other environmentally persistent compounds, providing aqueous foaming compositions which are substantially or totally biodegradable and/or environmentally compatible.

The reference to any prior art in this specification is not, and should not be taken as, an acknowledgment or any form of suggestion that that prior art forms part of the common general knowledge in the field of endeavour.

Those skilled in the art will appreciate that the invention described herein is susceptible to variations and modifications other than those specifically described. It is to be understood that the invention includes all such variations and modifications. The invention also includes all of the steps, features, compositions and compounds referred to or indicated in this specification individually or collectively, and any and all combinations of any two or more of said steps or features.

## Claims

1. A foam forming composition comprising:
a carbonised saccharide composition,
a cross-linking agent selected from urea and a urea derivative,
a surfactant, and
water.

2. A foam forming composition of claim 1, wherein the carbonised saccharide composition is a mixture of one or more simple sugars and a carbonised saccharide.

3. A foam forming composition of claim 2, wherein the simple sugars are selected from the group consisting of sucrose, glucose, fructose, mannose and invert sugar.

4. A foam forming composition of claim 1, wherein the carbonised saccharide composition is brown sugar.

5. A foam forming composition of claim 4, wherein the brown sugar comprises a mixture of sucrose and molasses.

6. A foam forming composition of claim 1, wherein the carbonised saccharide composition is present in an amount of 6-25 wt.%.

7. A foam forming composition of claim 1, wherein the water is present in an amount of 5-89.9 wt%.

8. A foam forming composition of claim 1, wherein the surfactant is present in an amount of 3-33 wt%.

9. A foam forming composition of claim 1, wherein a thickener is present in an amount of up to 10 wt%.

10. A foam forming composition of claim 1, wherein the composition is formulated as a concentrate of about 1%, 3% or 6% by volume.

11. A foam forming composition of claim 1 further comprising a thickening agent and optionally one or more components selected from the group consisting of organic solvents, polymeric stabilisers, preservatives, buffers, corrosion inhibitors, antimicrobial agents, divalent ion salts, foam stabilisers, humectants and diluents.

12. A foam forming composition of claim 1, wherein the surfactant is a water-soluble hydrocarbon surfactant or silicone surfactant, and wherein the surfactant is non-ionic, anionic, cationic or amphoteric.

13. A foam forming composition of claim 11, wherein the thickening agent is a polyhydroxy polymer, polyacrylamide, cellulosic resin, polyacrylic acid, polyethylene oxide and mixtures thereof.

14. A foam forming composition of claim 11, wherein the organic solvent is selected from the group consisting of glycols and glycol ethers.

15. A foam forming composition of claim 1 which is free of fluorochemical compounds.

16. A process for preparing a foam composition including the step.of aerating an aqueous diluted solution of a foam forming composition according to any preceding claim.

17. A process of claim 16, wherein the foam forming composition is aerated by a compressed gas foaming system.

18. A process of claim 16, wherein the foam forming composition is aerated by adding the foam forming composition to a flow of water and discharging through a nozzle.

19. A foam composition prepared by a process of any of claims 16 to 18.

20. A process for preparing a foam forming composition including the step of mixing a carbonised saccharide composition, a cross-linking agent selected from urea and urea derivative, a surfactant and water in any order to prepare the foam forming composition.

21. A method for suppressing or extinguishing fires including the step of applying a foamed composition comprising a carbonised saccharide composition, a cross-linking agent selected from urea and a urea derivative, a surfactant and water to a fire or to a hot or flammable surface.

22. A method of claim 21, wherein the carbonised saccharide composition is a mixture of one or more simple sugars and a carbonised saccharide.

23. A method of claim 22, wherein the simple sugars are selected from the group consisting of sucrose, glucose, fructose, mannose and invert sugar.

24. A method of claim 21, wherein the carbonised saccharide composition is brown sugar.

25. A method of claim 21, wherein the fire is a polar solvent fire.

26. A method of claim 25, wherein the polar solvent is ethanol, methanol or acetone.

27. A method of claim 21, wherein the fire is a non-polar solvent fire.

28. A method of claim 27, wherein the non-polar solvent is avgas, avtur, petroleum, MTBE or ether/gasoline blends.

29. A method of claim 21, wherein the foamed composition is free of fluorochemical compounds.

## Patentansprüche

1. Eine schaumbildende Zusammensetzung umfassend:
eine karbonisierte Saccharidzusammensetzung,
ein Vernetzungsmittel, ausgewählt aus Harnstoff und einem Harnstoffderivat,
ein grenzflächenaktives Mittel, und
Wasser.

2. Eine schaumbildende Zusammensetzung gemäß Anspruch 1, wobei die karbonisierte Saccharidzusammensetzung ein Gemisch aus einem oder mehr Einfachzuckern und einem karbonisierten Saccharid ist.

3. Eine schaumbildende Zusammensetzung gemäß Anspruch 2, wobei die Einfachzucker aus der Gruppe bestehend aus Saccharose, Glukose, Fruktose, Mannose und Invertzucker ausgewählt sind.

4. Eine schaumbildende Zusammensetzung gemäß Anspruch 1, wobei die karbonisierte Saccharidzusammensetzung brauner Zucker ist.

5. Eine schaumbildende Zusammensetzung gemäß Anspruch 4, wobei der braune Zucker ein Gemisch aus Saccharose und Melasse umfasst.

6. Eine schaumbildende Zusammensetzung gemäß Anspruch 1, wobei die karbonisierte Saccharidzusammensetzung in einer Menge von 6 bis 25 Gew.-% vorhanden ist.

7. Eine schaumbildende Zusammensetzung gemäß Anspruch 1, wobei das Wasser in einer Menge von 5 bis 89,9 Gew.-% vorhanden ist.

8. Eine schaumbildende Zusammensetzung gemäß Anspruch 1, wobei das grenzflächenaktive Mittel in einer Menge von 3 bis 33 Gew.-% vorhanden ist.

9. Eine schaumbildende Zusammensetzung gemäß Anspruch 1, wobei ein Verdickungsmittel in einer Menge von bis zu 10 Gew.-% vorhanden ist.

10. Eine schaumbildende Zusammensetzung gemäß Anspruch 1, wobei die Zusammensetzung als ein Konzentrat von etwa 1 Volumen-%, 3 Volumen-% oder 6 Volumen-% formuliert ist.

11. Eine schaumbildende Zusammensetzung gemäß Anspruch 1, ferner umfassend ein Verdickungsmittel und wahlweise ein oder mehr Bestandteile, die aus der Gruppe bestehend aus organischen Lösungsmitteln, polymeren Stabilisatoren, Konservierungsmitteln, Puffern, Korrosionshemmern, antimikrobiellen Mitteln, zweiwertigen Ionensalzen, Schaumstabilisatoren, Feuchthaltemitteln und Verdünnungsmitteln ausgewählt sind.

12. Eine schaumbildende Zusammensetzung gemäß Anspruch 1, wobei das grenzflächenaktive Mittel ein wasserlösliches grenzflächenaktives Mittel vom Kohlenwasserstoff-Typ oder ein wasserlösliches grenzflächenaktives Mittel vom Silikon-Typ ist und wobei das grenzflächenaktive Mittel nichtionisch, anionisch, kationisch oder amphoter ist.

13. Eine schaumbildende Zusammensetzung gemäß Anspruch 11, wobei das Verdickungsmittel ein Polyhydroxypolymer, Polyacrylamid, cellulosisches Harz, Polyacrylsäure, Polyethylenoxid und Gemische davon ist.

14. Eine schaumbildende Zusammensetzung gemäß Anspruch 11, wobei das organische Lösungsmittel aus der Gruppe bestehend aus Glykolen und Glykolethern ausgewählt ist.

15. Eine schaumbildende Zusammensetzung gemäß Anspruch 1, welche frei von fluorchemischen Verbindungen ist.

16. Ein Verfahren zur Herstellung einer Schaumzusammensetzung enthaltend den Schritt des Luftzuführens zu einer wässrigen verdünnten Lösung einer schaumbildenden Zusammensetzung gemäß einem der vorherigen Ansprüche.

17. Ein Verfahren gemäß Anspruch 16, wobei der schaumbildenden Zusammensetzung durch ein Druckgasschaumsystem Luft zugeführt wird.

18. Ein Verfahren gemäß Anspruch 16, wobei der schaumbildenden Zusammensetzung Luft zugeführt wird, indem die schaumbildende Zusammensetzung zu einen Wasserstrom zugeführt wird und sie durch eine Düse abgelassen wird.

19. Eine Schaumzusammensetzung, die durch ein Verfahren gemäß einem der Ansprüche 16 bis 18 hergestellt ist.

20. Ein Verfahren zur Herstellung einer schaumbildenden Zusammensetzung, enthaltend den Schritt des Mischens einer karbonisierten Saccharidzusammensetzung, eines Vernetzungsmittels, ausgewählt aus Harnstoff und einem Harnstoffderivat, eines grenzflächenaktiven Mittels und Wasser in beliebiger Reihenfolge, um die schaumbildende Zusammensetzung zu bilden.

21. Ein Verfahren zum Unterdrücken oder Löschen von Bränden, enthaltend den Schritt des Anwendens einer geschäumten Zusammensetzung, umfassend eine karbonisierte Saccharidzusammensetzung, ein Vernetzungsmittel, ausgewählt aus Harnstoff und einem Harnstoffderivat, ein grenzflächenaktives Mittel und Wasser, auf einen Brand oder eine heiße oder entzündliche Oberfläche.

22. Ein Verfahren gemäß Anspruch 21, wobei die karbonisierte Saccharidzusammensetzung ein Gemisch aus einem oder mehr Einfachzuckern und einem karbonisierten Saccharid ist.

23. Ein Verfahren gemäß Anspruch 22, wobei die Einfachzucker aus der.Gruppe bestehend aus Saccharose, Glukose, Fruktose, Mannose und Invertzucker ausgewählt sind.

24. Ein Verfahren gemäß Anspruch 21, wobei die karbonisierte Saccharidzusammensetzung brauner Zucker ist.

25. Ein Verfahren gemäß Anspruch 21, wobei der Brand ein Brand eines polaren Lösungsmittels ist.

26. Ein Verfahren gemäß Anspruch 25, wobei das polare Lösungsmittel Ethanol, Methanol oder Aceton ist.

27. Ein Verfahren gemäß Anspruch 21, wobei der Brand ein Brand eines unpolaren Lösungsmittels ist.

28. Ein Verfahren gemäß Anspruch 27, wobei das unpolare Lösungsmittel Flugbenzin, Flugturbinenkraftstoff, Petroleum, MTBE oder ein Ether/Benzingemisch ist.

29. Ein Verfahren gemäß Anspruch 21, wobei die geschäumte Zusammensetzung frei von fluorchemischen Verbindungen ist.

## Revendications

1. Composition formant une mousse comprenant :
une composition de saccharide carbonisé,
un agent réticulant choisi parmi l'urée et un dérivé de l'urée,
un tensioactif, et
de l'eau.

2. Composition formant une mousse selon la revendication 1, où la composition de saccharide carbonisé est un mélange d'un ou plusieurs sucres simples et d'un saccharide carbonisé.

3. Composition formant une mousse selon la revendication 2, où les sucres simples sont choisis dans le groupe consistant en saccharose, glucose, fructose, mannose et sucre inverti.

4. Composition formant une mousse selon la revendication 1, où la composition de saccharide carbonisé est le sucre roux.

5. Composition formant une mousse selon la revendication 4, où le sucre roux comprend un mélange de saccharose et de mélasse.

6. Composition formant une mousse selon la revendication 1, où la composition de saccharide carbonisé est présente en une quantité de 6-25 % en poids.

7. Composition formant une mousse selon la revendication 1, où l'eau est présente en une quantité de 5-89,9 % en poids.

8. Composition formant une mousse selon la revendication 1, où le tensioactif est présent en une quantité de 3-33 % en poids.

9. Composition formant une mousse selon la revendication 1, où un épaississant est présent en une quantité de jusqu'à 10% en poids.

10. Composition formant une mousse selon la revendication 1, où la composition est formulée sous forme d'un concentré d'environ 1 %, 3 % ou 6 % en volume.

11. Composition formant une mousse selon la revendication 1 comprenant en outre un agent épaississant et éventuellement un ou plusieurs composants choisis dans le groupe consistant en les solvants organiques, les stabilisants polymères, les conservateurs, les tampons, les inhibiteurs de corrosion, les agents antimicrobiens, les sels d'ions divalents, les stabilisants de mousse, les humectants et les diluants.

12. Composition formant une mousse selon la revendication 1, où le tensioactif est un tensioactif hydrocarboné ou un tensioactif de silicone soluble dans l'eau et où le tensioactif est non ionique, anionique, cationique ou amphotère.

13. Composition formant une mousse selon la revendication 11, où l'agent épaississant est un polymère polyhydroxylé, un polyacrylamide, une résine cellulosique, un poly(acide acrylique), un poly(oxyde d'éthylène) et leurs mélanges.

14. Composition formant une mousse selon la revendication 11, où le solvant organique est choisi dans le groupe consistant en les glycols et les éthers de glycol.

15. Composition formant une mousse selon la revendication 1 qui est dépourvue de composés fluorochimiques.

16. Procédé pour préparer une composition de mousse incluant l'étape d'aération d'une solution aqueuse diluée d'une composition formant une mousse selon l'une quelconque des revendications précédentes.

17. Procédé selon la revendication 16, où la composition formant une mousse est aérée par un système de moussage à gaz comprimé.

18. Procédé selon la revendication 16, où la composition formant une mousse est aérée par addition de la composition formant une mousse à un courant d'eau et évacuation à travers une buse.

19. Composition de mousse préparée par un procédé selon l'une quelconque des revendications 16 à 18.

20. Procédé pour préparer une composition formant une mousse incluant l'étape de mélange d'une composition de saccharide carbonisé, d'un agent réticulant choisi parmi l'urée et un dérivé de l'urée, d'un tensioactif et d'eau dans un ordre quelconque pour préparer la composition formant une mousse.

21. Procédé pour supprimer ou éteindre des feux incluant l'étape d'application d'une composition transformée en mousse comprenant une composition de saccharide carbonisé, un agent réticulant choisi parmi l'urée et un dérivé de l'urée, un tensioactif et de l'eau à un feu ou à une surface chaude ou inflammable.

22. Procédé selon la revendication 21, où la composition de saccharide carbonisé est un mélange d'un ou plusieurs sucres simples et d'un saccharide carbonisé.

23. Procédé selon la revendication 22, où les sucres simples sont choisis dans le groupe consistant en saccharose, glucose, fructose, mannose et sucre inverti.

24. Procédé selon la revendication 21, où la composition de saccharide carbonisé est le sucre roux.

25. Procédé selon la revendication 21, où le feu est un feu de solvant polaire.

26. Procédé selon la revendication 25, où le solvant polaire est l'éthanol, le méthanol ou l'acétone.

27. Procédé selon la revendication 21, où le feu est un feu de solvant non polaire.

28. Procédé selon la revendication 27, où le solvant non polaire est l'essence aviation, l'avtur, le pétrole, le MTBE ou les mélanges éther/essence.

29. Procédé selon la revendication 21, où la composition transformée en mousse est dépourvue de composés fluorochimiques.
